Europäisches Patentamt

European Patent Office

Office européen des brevets

(11) Publication number : **0 483 960 A1**

# (12) EUROPEAN PATENT APPLICATION

(21) Application number : **91308064.4**

(22) Date of filing : **03.09.91**

(51) Int. Cl.$^5$ : **F27D 9/00, F27B 9/12**

(30) Priority : **14.09.90 JP 245081/90**

(43) Date of publication of application :
**06.05.92 Bulletin 92/19**

(84) Designated Contracting States :
**BE DE ES FR GB IT SE**

(71) Applicant : **NGK INSULATORS, LTD.**
**2-56 Suda-cho, Mizuho-ku**
**Nagoya 467 (JP)**

(72) Inventor : **Aoki, Michiroh**
**NGK Takemi-ryo 34, Takemi-cho 1-chome,**
**Mizuho-ku**
**Nagoya 467 (JP)**

(74) Representative : **Stoner, Gerard Patrick et al**
**Mewburn Ellis 2 Cursitor Street**
**London EC4A 1BQ (GB)**

(54) Cooling system for continuous kiln.

(57) A cooling system (5) is provided for the cooling zone (1c) of a kiln housing (1) of a continuous kiln (10). By the cooling system (5), a certain amount of gas in the kiln is exhausted through exhaust ports (11,12) provided at a kiln chamber (4) through an exterior gas circuit (6) and back through inlet ports (20,21) also provided at the cooling zone (1c) of the kiln chamber (4). The gas circuit (6) is equipped with an out-of-kiln heat exchanger (7), and with a blowing machine (8) between the heat exchanger (7) and inlet ports (20,21). In the heat exchanger (7), cooling water circulates to absorb heat of the gas circulating in the kiln.

FIG. 3

EP 0 483 960 A1

This invention relates to a cooling system for a continuous kiln, particularly although not exclusively as used for firing ceramic products such as soft ferrite and other high-functioned ceramics, which need to be fired under low oxygen atmosphere in a cooling zone of the kiln.

A conventional continuous kiln such as tunnel kiln and roller hearth kiln has preheating, firing, and cooling zones continuously in the longitudinal direction of the kiln. With such a construction, temperature and atmosphere of each zone is liable to be affected by neighbor zones.

To produce high-functioned ceramics such as soft ferrite, it is needed to cool down rapidly and also to control or adjust an atmosphere of the cooling zones. Therefore, a conventional continuous kiln introduces large amounts of cooling air or inert gas such as $N_2$ into the cooling zone.

However, we note that introducing substantial cooling air causes a change of chemical composition, e.g. oxygen content, that can deteriorate characteristics of high-functioned ceramics.

Moreover, introducing inert gas such as $N_2$ into the cooling zone has the further problem of expense, because of its high cost large amount of innert gas consumption.

The problem addressed herein is to provide a new cooling system for a continuous kiln. In particular, it would be preferred to provide an improved cooling system for a continuous kiln that will ensure quick cooling of the high-functioned ceramics and will shorten the cooling zone.

It would also be preferable to provide an improved cooling system for continuous kiln that will prevent the atmosphere in the cooling zone from changing its chemical composition by reducing cooling gas to be introduced and ensure high performance of ceramic characteristics.

To this end, the present invention provides a cooling system for a continuous kiln, comprising a gas circuit for introducing gas from inside a cooling zone from a exhaust port mounted on the cooling zone of the kiln via outside of a cooling zone into an inlet port mounted on the cooling zone of said kiln, an out-of-kiln heat exchanger provided on the gas circuit to absorb heat of said inner gas by a cooling medium and a blowing machine provided on said gas circuit, to circulate gas in said gas circuit. Also, a corresponding method.

The exhaust port may be provided on the top closure or sidewalls of the cooling zone. The inlet port can be provided on sidewalls of the cooling zone, at the top closure of the kiln or at the kiln floor under carriages, yet preferably on the sidewalls in view of heat transmission.

The cooling medium circulating in the out-of-kiln heat exchanger is, preferably, water or air. Water can cool the gas in the kiln more effectively than air as the cooling medium.

The blowing machine is preferably an air blower or an air fan, yet it is not limited to these machines.

According to a specific embodiment of the invention, the cooling system can allow to circulate large amount of cooling gas without introducing new fresh air that changes chemical composition, especially oxygen content in that cooling zone. Consequently, the length of the cooling zone can be shortened. Furthermore, the cooling system circulates inner gas of the cooling zone that enables proper control of temperature and atmosphere especially in cooling zone of the kiln, and ensures quick cooling of ceramic products. Further, since the cooling system can be made with a construction in which a certain amount of gas fulfilled in the kiln is circulated in the cooling zone, ceramic products are greatly prevented from having an adverse effect in preheating and firing zones.

A description of the specific embodiments follows. Reference is made to the accompanying drawings, in which

FIGURE 1 is a schematic circuit diagram showing a cooling system embodying the present invention;

FIGURE 2 is a schematic longitudinal sectional view of a continuous kiln;

FIGURE 3 is a plan view showing a cooling system embodying the invention;

FIGURE 4 is a cross sectional view of a cooling system embodying the invention;

FIGURE 5 is a diagram showing an instance of temperature distribution of a continuous kiln;

FIGURE 6 is a cross sectional view showing inlet ports according to a modification.

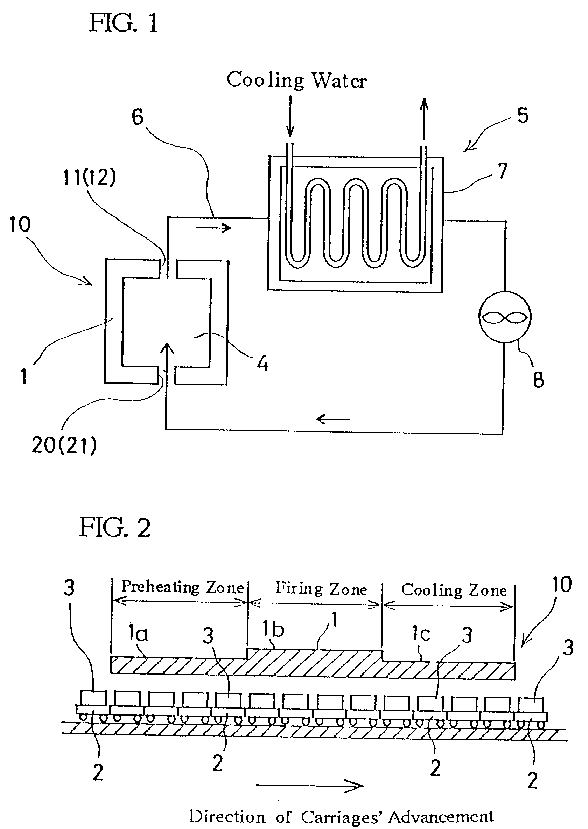

As seen in FIGURE 2, a continuous kiln is a tunnel kiln comprising a kiln housing 1 and having preheating zone 1a, firing zone 1b, and cooling zone 1c.

Carriages 2 are conveyed in from an entrance of the tunnel kiln (in the left end of the kiln as viewed in FIGURE 2). As the carriages 2 move in the kiln along an arrow indicated in FIGURE 2, ceramic products 3 arranged on the carriages 2 are also carried along this arrow. The ceramic products arranged on the carriages 2 are heated at a temperature corresponding to a controlled temperature schedule in the kiln. After firing, the ceramic products 3 are carried out from an exit of the kiln (in the right end of the kiln as viewed in FIGURE 2).

A cooling system 5, as shown in FIGURE 1, is fitted with the cooling zone 1c of the kiln housing 1 of the continuous kiln 10. As shown in FIGURE 1, a certain amount of gas fulfilled in the kiln is exhausted from exhaust ports 11 and 12 provided at a kiln chamber 4. The exhaust gas flows into a gas circuit 6, recycles in the gas circuit 6, and flows into inlet ports 20 and 21 provided at the cooling zone 1c of the kiln chamber 4. The gas circuit 6 is equipped with an out-of-kiln heat exchanger 7 and with a blowing machine 8 between the heat exchanger 7 and inlet ports 20 and 21. In the heat exchanger 7, cooling water circulates to absorb heat of the gas taken out from the cooling zone.

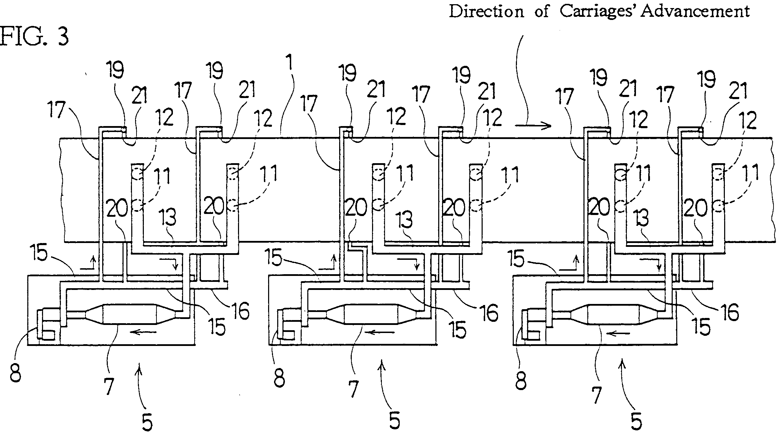

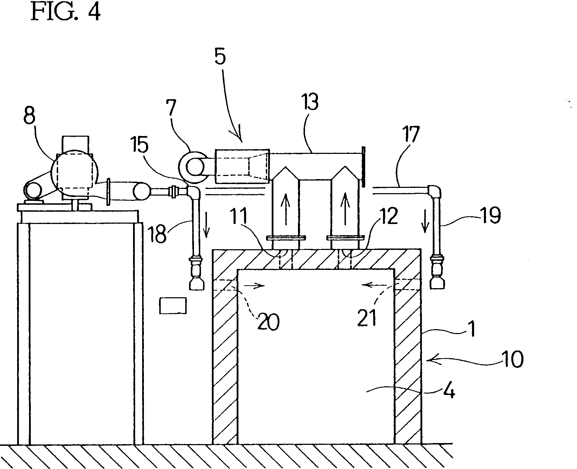

Construction of the cooling system 5 is further shown more concretely in FIGURES 3 and 4. Exhaust ports 11 and 12 are provided at the top closure of the cooling zone 1c of the continuous kiln 10. Such construction enables to cool the atmosphere of the cooling zone 1c effectively. The exhaust ports 11 and 12 are connected with one end of a pipe 13 included in the above-mentioned gas circuit 6. The other end of the pipe 13 is connected with the out-of-kiln heat exchanger 7.

The out-of-kiln heat exchanger 7 is arranged in such a manner that a cooling pipe in which cooling water circulates has a large surface to contact with circulating gas taken out from the kiln. In the out-of-kiln heat exchanger 7, the cooling water in the cooling pipe absorbs heat of and cools the circulating gas.

A blowing machine 8 is provided on the downstream of the out-of-kiln heat exchanger 7 in such a manner that the cooled gas is sent to a pipeline 15 by the blowing machine 8. The pipeline 15 is divaricated into branch pipes 16 and 17. Each of the branch pipes 16 and 17 is connected respectively with one end of pipelines 18 and 19 arranged on sidewalls of the cooling zone 1c of the continuous kiln 10. Each of the other ends of the pipelines 18 and 19 communicates respectively with inlet ports 20 and 21 provided on the sidewalls of the continuous kiln 10.

One inlet port 20 is provided at one sidewall and the other inlet port 21 is provided on the opposite sidewall of the cooling zone 1c of the continuous kiln 10, so that the exhaust gas injected from each of the inlet ports 20 and 21 into the kiln chamber and collide with one another. Additionally, each of the inlet ports 20 and 21 is offset, as shown in FIGURE 3, at a position of the exhaust ports 11 and 12 respectively in the longitudinal direction of the cooling zone so that the gas circulating in the cooling zone has a good cooling effect.

The exhausted gas flows through the exhaust ports 11 and 12 via the pipe 13 into the out-of-kiln heat exchanger 7, in which the exhaust gas releases heat and cools down. The cooled gas is blown by the blowing machine 8 through the pipeline 15, the branch pipes 16 and 17, the pipelines 18 and 19, and exhaust ports 20 and 21, into the kiln chamber. By this way of circulation, the atmosphere gas at the cooling zone 1c is cooled without chemical composition being changed in the continuous kiln 10.

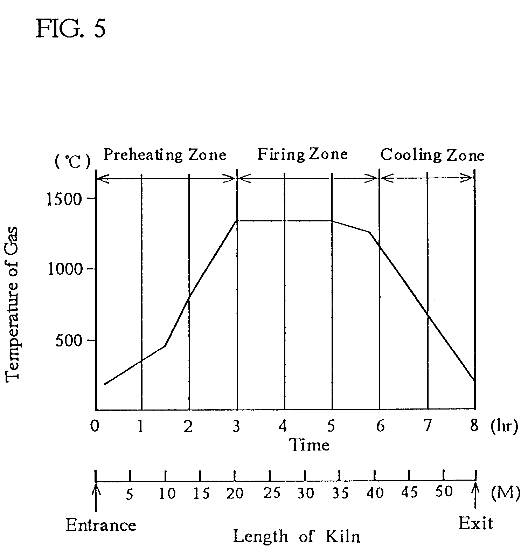

Temperature of the gas in the kiln chamber, as shown in FIGURE 5, rises gradually in preheating zone, taking highest point in firing zone, and declining in cooling zone. Ceramic products fired in the firing zone are cooled rapidly by the above-explained cooling system 5 in the cooling zone 1c shown in FIGURE 2. In addition, since the cooling system 5 provided in the cooling zone 1c eliminates introducing fresh cooling air out of the kiln that can avoid having adverse effect in the cooling zone 1c.

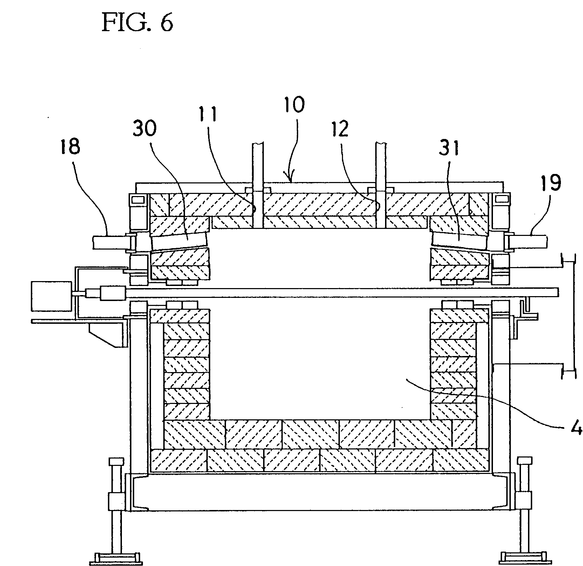

A modification of the invention which is applied to roller hearth kiln is shown in FIGURE 6 illustrating the cross section of a cooling system viewed from an entrance of a kiln. Inlet ports 30 and 31 are provided on sidewalls of the kiln in such a manner that each of the ports 30 and 31 faces one another and nozzles of the inlet ports 30 and 31 slant, upwardly and inwardly, as seen in FIGURE 6. With such construction, ceramic products to be fired carried on setters are protected from direct cool blow. Since the other parts of the modification correspond to those of the above-described embodiment shown in FIGURE 4, same numerals are given to the substantially equal parts and detailed explanation of the modification is omitted.

In the above embodiments, the gas in the interior space of the kiln, and which is circulated, is an inert gas containing not more than small quantities of $O_2$. In particular, $N_2$ containing $10^{-4}$-1% $O_2$ was used. The gas will also include a small amount of other gases generated at the surfaces of the ceramic products during operation.

While the above description has referred to what are presently considered to be the most practical embodiments, it is to be understood that the invention is not limited to these.

## Claims

1. A cooling system for a continuous kiln, comprising

a gas circuit for gas to circulate from inside the kiln, through an exhaust (11,12) at a cooling zone (1c) of the kiln to outside the kiln, and re-enter the kiln through an inlet (20,21);

a heat-exchanger (7) for cooling the gas outside the kiln as it circulates in the circuit, and

means (8) for driving the gas in circulation through the circuit.

2. A cooling system according to claim 1 in which the exhaust comprises one or more exhaust ports (11,12) in a top wall of the kiln at the cooling zone (1c).

3. A cooling system according to claim 1 or claim 2 in which the exhaust (11,12) is longitudinally offset in the kiln relative to the inlet (20,21).

4. A cooling system according to any one of the preceding claims in which the inlet comprises one or more ports (20,21) in a side wall of the kiln.

5. A cooling system according to claim 4 in which opposed inlet ports (20,21) are provided in respective opposing side walls of the kiln.

6. A cooling system according to any one of the preceding claims in which the inlet comprises at least one inlet port which is upwardly inclined as it enters the kiln.

7. A cooling system according to claim 1 in which the inlet comprises at least one inlet port in the top wall of the kiln at the cooling zone, and/or at least one inlet port in the kiln floor beneath carriages (2) which run therein.

8. A cooling system according to any one of the preceding claims in which the heat exchanger (7) uses water as a cooling medium to cool the gas.

9. A cooling system according to any one of the preceding claims, in which the means for driving the gas in circulation comprises a blower or fan (8).

10. A method of operating a continuous kiln, in which gas from the kiln interior is extracted through an exhaust (11,12) at a cooling zone (1c) of the kiln, and driven round a circuit in which the gas is cooled by a heat exchanger (7) before returning to the kiln interior at the cooling zone (1c) through an inlet (20,21).

FIG. 1

Cooling Water

FIG. 2

Direction of Carriages' Advancement

FIG. 3

Direction of Carriages' Advancement

EP 0 483 960 A1

FIG. 4

# FIG. 5

FIG. 6

European Patent
Office

**EUROPEAN SEARCH REPORT**

Application Number

EP 91 30 8064

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 015 844 (P. SCHNEIDER ROHRLEITUNGSBAU)<br>* Page 7, lines 18-27; claims; figures 3,2 * | 1,3,4,5,8,9 | F 27 D    9/00<br>F 27 B    9/12 |
| X | FR-A-2 599 483 (CHUGAI RO CO., LTD)<br>* Claims; figures * | 1,3,8,9 | |
| X | EP-A-0 257 218 (HANS LINGL)<br>* Claims; figures * | 1,2,8,9 | |
| X | FR-A-1 261 890 (ATON PLANUNGS- UND BAUGESELLSCHAFT)<br>* Abstract point 1; figure 6 * | 1,2,5,9 | |
| A | DE-C- 607 099 (SIEMENS)<br>* Page 1, lines 60-66; figure 1 * | 7 | |
| | | | TECHNICAL FIELDS SEARCHED (Int. Cl.5)<br><br>F 27 B<br>F 27 D |

The present search report has been drawn up for all claims

| Place of search | Date of completion of the search | Examiner |
|---|---|---|
| THE HAGUE | 09-11-1991 | COULOMB J.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)